# EUROPÄISCHE PATENTSCHRIFT

(11) **EP 0 782 513 B1**
(45) Veröffentlichungstag und Bekanntmachung des Hinweises auf die Patenterteilung: **02.12.1998**
(21) Anmeldenummer: 95934066.2
(22) Anmeldetag: 18.09.1995
(51) Int. Cl.: B60R 16/02

(54) **SCHALTUNGSANORDNUNG ZUR ÜBERWACHUNG EINER STEUERSCHALTUNG**
CIRCUIT ARRANGEMENT FOR MONITORING A CONTROL CIRCUIT
CIRCUIT DE CONTROLE D'UN CIRCUIT DE COMMANDE

(30) Priorität: 24.09.1994 DE 4434179
(43) Veröffentlichungstag der Anmeldung: 09.07.1997
(73) Patentinhaber: ITT Automotive Europe GmbH, 60488 Frankfurt am Main (DE)
(72) Erfinder: ZYDEK, Michael, D-25428 Langgöns (DE); FEY, Wolfgang, D-65527 Niedernhausen (DE)
(86) Internationale Anmeldenummer: EP9503656
(87) Internationale Veröffentlichungsnummer: WO9609190

(56) Entgegenhaltungen:
- DE-A- 3 722 527
- DE-A- 3 835 662
- DE-A- 3 927 972

## Beschreibung

Die Erfindung bezieht sich auf eine Schaltungsanordnung zur Überwachung einer Steuerschaltung, die einen Treibertransistor aufweist, mit dem in einer induktiven Last, zum Beispiel einer Spule, ein vorgegebener Strommittelwert durch getaktete, pulsweiten-modulierte Ansteuerung (PWM) des Treibertransistors eingestellt wird, und bei der in den Sperrintervallen des Treibertransistors während der PWM durch die induktive Last ein Stromfluß über einen zu der Last parallelen, mit einem Schalter ausgerüsteten Schaltungszweig hervorgerufen wird.

Bekannte hydraulische Bremsanlagen mit elektronischer Blokkierschutz-(ABS) oder Antriebsschlupfregelung (ASR) enthalten elektrisch bzw. elektromagnetisch betätigbare Hydraulikventile, die mit Hilfe von Treibern, deren Endstufen Treibertransistoren enthalten, geschaltet werden. Dies ist ein Beispiel für eine Steuerschaltung, die einen Treibertransistor mit induktiver Last aufweist. Mit diesem Treibertransistor wird der Stromfluß durch diesen induktiven Lastwiderstand, nämlich durch die Spule des Hydraulikventils, geschaltet. Beim Sperren des Treibertransistors tendiert bekanntlich die in der Spule gespeicherte Energie zur Aufrechterhaltung des Spulenstroms, was sich in einer entsprechend hohen Abschaltspannung über der Spule äußert. Es wurde bereits vorgeschlagen, den Spulenstrom nach dem Sperren des Treibertransistors über einen zur induktiven Last parallelen, mit einem Schalttransistor ausgerüsteten Schaltungszweig zu führen. Durch getaktetes Ansteuern des Treibertransistors, Schließen des Schalters im zur Last parallelen Schaltungszweig während der Sperrintervalle des Treibertransistors und Modulieren des Puls/Pulspausenverhältnisses der Ansteuerpulse bzw. des Ansteuertaktes läßt sich ein Strom (mittel)wert auf vorgegebenem Niveau einstellen. Bei Schaltungen der hier in Rede stehenden Art wird der vorgegebene Strom-wert oder Strom-Sollwert im allgemeinen durch Vergleich mit einem internen Referenzwert definiert. Es werden komplexe integrierte Schaltkreise verwendet, die sowohl den Referenzwert als auch die Schaltschwellen der Transistoren, die im Rahmen der PWM das Puls/Pulspausenverhältnis bestimmen, festlegen. Hierbei tritt die Schwierigkeit auf, daß sich unbemerkt der Referenzwert und die Schwellen in gleicher Richtung ändern können und daß Fehler, insbesondere ein Abweichen des Spulenstroms vom Sollwert nicht zu erkennen sind. Auch die IC-internen Strom-Überwachungskreise sind nämlich von dem internen Referenzwert abhängig; die Schwellwerte der internen Strom-Überwachung werden daher bei sich änderndem Referenzwert in gleicher Weise verschoben.

Der Erfindung liegt nun die Aufgabe zugrunde, eine Schaltungsanordnung dieser Art dahingehend Weiterzuentwickeln, daß auf einfache Weise, mit geringem Aufwand und mit hoher Zuverlässigkeit der Spulenstrom bzw. der durch die induktive Last fließende Strom - unabhängig von eventuellen Schaltungsinternen Maßnahmen - überwacht wird.

Es hat sich gezeigt, daß diese Aufgabe durch die im Anspruch 1 beschriebene Schaltungsanordnung gelöst wird, deren Besonderheit darin besteht, daß parallel zu dem Treibertransistor über ein Schaltelement eine Strommeßeinrichtung angeschlossen ist und daß während einer Testphase der während der Sperrintervalle durch die induktive Last hervorgerufene Strom zu dieser Strommeßeinrichtung geleitet wird.

Erfindunggemäß wird also eine zusätzliche, externe, von der eigentlichen Steuerungsschaltung und den dazugehörigen Überwachungskreisen unabhängige Strommessung und Stromüberwachung vorgesehen, deren Wirkungsweise auf dem Weiterfließen des Spulenstroms nach dem Sperren des Treibertransistors als Folge der Induktivität und auf der Umleitung dieses Stroms zu der Meßeinrichtung beruht. Enthält die Meßeinrichtung einen ohmschen Widerstand, über den der umgeleitete Strom fließen muß, fällt an diesem Widerstand eine stromproportionale Spannung ab, die nur bei intakter Steuerschaltung einen vorgegebenen Wert überschreitet oder innerhalb vorgegebener Grenzen liegt. Beispielsweise kann ein über der Versorgungsspannung der Steuerschaltung liegender Spannungsabfall nur als Folge der Abschaltung der induktiven Last, nicht jedoch als Folge eines Kurzschlusses über dieser Last, entstehen.

Einige zweckmäßige Ausführungsbeispiele der Erfindung sind in den Unteransprüchen genannt.

Weitere Einzelheiten der Erfindung gehen aus der folgenden Beschreibung eines Ausführungsbeispiels anhand der beigefügten Abbildungen hervor. Es zeigen:
- Fig. 1: in schematisch vereinfachter Darstellung die wesentlichen Komponenten einer Schaltungsanordnung nach der Erfindung und
- Fig. 2A - 2D: den Stromverlauf durch die induktive Last und den zeitgleichen Schaltzustand der Transistoren der Schaltungsanordnung nach Figur 1.

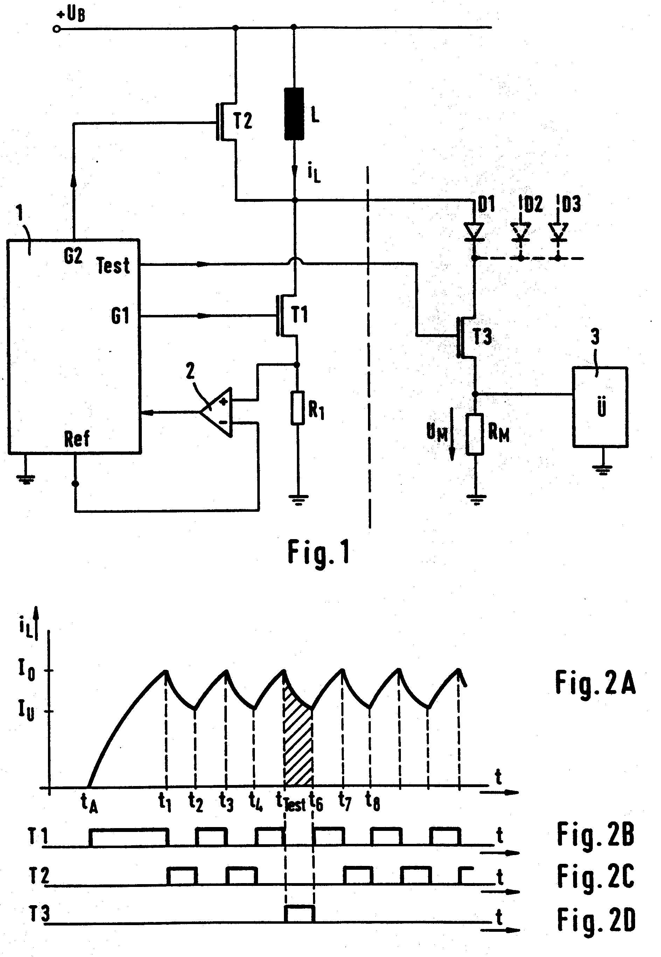

In dem dargestellten Ausführungsbeispiel der Erfindung nach Figur 1 wird ein Treibertransistor Tl von einer Logikschaltung 1 über deren Ausgang Gl gesteuert. Mit solchen Treibertransistoren Tl werden zum Beispiel die Hydraulikventile einer blockiergeschützten Bremsanlage oder anderer elektronisch geregelter hydraulischer Systeme gesteuert. Die Last des Treibertransistors Tl ist eine Spule, also eine - vorwiegend induktive Last; der induktive Widerstand der Hydraulikspule ist in Figur 1 mit "L' symbolisiert.

Ein sehr niederohmiger Widerstand R, im Source-Anschluß S des nach Figur 1 vorgesehenen Transistors Tl dient zur Ermittlung des durch den Transistors Tl fließenden Stroms. Sobald der Spannungsabfall über dem Meßwiderstand R einen Schwellwert überschritten hat, wird dies mit Hilfe eines Komparators 2, der den Spannungsabfall über R₁, mit einem Referenzwert Ref vergleicht, der Logikschaltung 1 signalisiert.

Ein zweiter Transistor 2 liegt in einem parallelen Zweig zur induktiven Last L. Wird gleichzeitig mit dem Sperren des Treibertransistors Tl der Transistor T2 über den Ausgang G2 der Logikschaltung 1 auf Durchlaß geschaltet, hat dies zur Folge, daß der Spulenstrom i 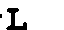 nach dem Sperren des Treibertransistors Tl über den Transistor T2 weiterfließen kann. Dadurch wird die Abschaltspannung über der induktiven Last L begrenzt und die in dieser Spule gespeicherte Energie abgebaut. Bliebe der Schalter offen bzw. der Transistor T2 gesperrt, würde bekanntlich über der induktiven Last L eine theoretisch beliebig hohe Abschaltspannung entstehen.

Durch getaktetes bzw. puls-weiten-moduliertes Ansteuern des Treibertransistors Tl in Verbindung mit dem Schließen des Stromweges mit Hilfe des Schalters, hier des Transistors T2 während der Sperrintervalle des Treibertransistors Tl wird ein bestimmter Strom oder Strommittelwert in der induktiven Last L eingestellt. Mit Hilfe des Meßwiderstandes R₁, des Komparators 2 und des Referenzwertes Ref läßt sich in der bereits geschilderten Weise schaltungsintern, d. h. durch entsprechende Auslegung der Logikschaltung 1, die Höhe des Strommittelwertes durch die induktive Last L festlegen. Bei Änderung des Referenzwertes Ref, z. B. durch Absinken der Versorgungsspannung für die Logikschaltung 1 oder auch durch andere Effekte, kann sich jedoch der vorgegebene Stromwert unbemerkt ändern.

Es ist daher eine zweite, redundante Strommessung oder Stromüberwachung sinnvoll und für manche Anwendungsfälle, falls der Stromwert sicherheitskritisch ist, sogar unbedingt erforderlich. Erfindungsgemäß ist deshalb ein zusätzlicher Stromzweig mit einem Schalttransistor T3 vorgesehen, der während bestimmter Zeitintervalle über einen Testausgang "Test" der Logikschaltung 1 angesteuert wird. Durch Ansteuerung des Transistors T3 beim gleichzeitigen Sperren des Treibertransistors Tl und gleichzeitigem Verhindern einer Ansteuerung des Transistors T2 wird der Spulenstrom bzw. der über die induktive Last L fließende Strom i 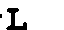 von dem Transistor T3 übernommen und verursacht über dem ohmschen Meßwiderstand R_{M} einen Spannungsabfall, der unmittelbar Aufschluß über den Zustand der Treiberschaltung, der Spule L des Hydraulikventils und insbesondere über die Höhe des Spulenstroms i 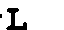 bzw. über den Strommittelwert zuläßt. Der Spannungsabfall über R_{M} wird nämlich fast ausschließlich von der Höhe des Spulenstroms i_{L} und dem Widerstandswert des Meßwiderstandes R_{M} bestimmt.

Zweckmäßigerweise wird der Widerstand R_{M} derart dimensioniert, daß über diesem Widerstand eine über der Versorgungsspannung +U_{B} liegende Spannung U_{M} abfällt, damit sofort zu erkennen ist, daß es sich hier um die Auswirkung der in der Induktivität L gespeicherten Energie handelt. Liegt ein Defekt vor, selbst bei einem Kurzschluß zur Versorgungsspannung +U_{B}, kann nämlich ein über der Spannung +U_{B} liegender Wert nicht erreicht werden. Eine Meßeinrichtung 3 dient zur Auswertung der über dem Widerstand R_{M} abfallenden Spannung U_{M}.

Die Stromzuführung zur Test- und Meßeinrichtung (T3, R_{M}, 3) wird über eine Entkopplungsdiode Dl geführt, damit auch weitere, über die gestrichelt angedeuteten Entkopplungsdioden D2, D3 angeschlossene (,hier nicht gezeigte) Treiberschaltungen bzw. induktive Lasten mit Hilfe der gleichen Meßeinrichtungen überwacht werden können.

Die Figuren 2A bis 2D dienen zur Veranschaulichung der beschriebenen Vorgänge. In Figur 2A ist der Spulenstrom i 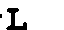 bei getakteter Ansteuerung des Treibertransistors Tl wiedergegeben. Zum Zeitpunkt t_{A} setzt die Ansteuerung des Treibertransistors Tl ein. Der mit Hilfe des Source-Widerstandes R₁, dem Komparator 2 und dem Referenzwert Ref ermittelte obere Strom-Grenzwert Iₒ ist zum Zeitpunkt t₁ erreicht. Folglich wird zum Zeitpunkt t₁, der Transistor Tl gesperrt und gleichzeitig der Transistor T2 im zur induktiven Last L parallelen Zweig auf Durchlaß geschaltet. Die Ansteuerungssignale für die Transistoren Tl und T2 sind in den Figuren 2B und 2C dargestellt.

Der Spulenstrom i_{L} wird nun über den Transistor T2 weitergeführt, wobei der Strom natürlich abnimmt. Nach einer bestimmten, vorgegebenen Zeitspanne, nämlich zum Zeitpunkt t, wird wiederum der Treibertransistor Tl eingeschaltet und T2 ausgeschaltet. Diese Vorgänge wiederholen sich im vorgegebenen Ansteuerungstakt.

Erfindungsgemäß wird die Höhe des Spulenstroms i_{L} extern zu bestimmten Zeitpunkten - ausgelöst durch regelmäßig wiederkehrende Ereignisse, z. B. nach jedem Einschalten des Führungsmotors, nach vorgegebenen Zeitintervallen - getestet. Dies geschieht im dargestellten Ausführungsbeispiel zum Zeitpunkt tₜₑₛₜ. Zu diesem Zeitpunkt, der mit dem Sperren des Treibertransistors Tl zusammenfällt, wird die Ansteuerung des Transistors T2 unterbunden (siehe Figur 2C) und der Transistor T3 angesteuert (siehe Figur 2D). Der Spulenstrom i_{L} fließt folglich über die Diode Dl, den Transistor T3 und über den Meßwiderstand R_{M}. Aus dem Spannungsabfall U_{M} über R_{M} ist erkennbar, ob die Treiberschaltung, die Versorgungsspannung usw. intakt sind.

Es wird zweckmäßigerweise überwacht, ob der Spannungsabfall K_{M} über R_{M} innerhalb vorgegebener Grenzen liegt, wobei die untere Grenze, wie zuvor erläutert, über der Versorgungsspannung +U_{B} liegen sollte, um den Zustand und die Anschaltung der Induktivität L überwachen zu können. Zur Vereinfachung der Überwachungsschaltung mag es genügen, das Überschreiten eines bestimmten Mindestwertes des Spannungsabfalles U_{M} über R_{M} zu überwachen.

Nach der Darstellung in Figur 2A ist die Zeitkonstante des Spannungsabfalls nach dem Einsetzen der Testprozedur (tₜₑₛₜ -t₆) mit der Zeitkonstante beim Energieabbau über T2 identisch bzw. sehr ähnlich. Dies gilt nur für das hier darge stellte Ausführungsbeispiel. Ein anderes Zeitverhalten während dieser Testphase ist in anderen Fällen durchaus akzeptierbar.

Eine Ausführungsart der Meßeinrichtung nach der Erfindung besteht darin, daß der Spitzenwert des Stromes zum Zeitpunkt tₜₑₛₜ bzw. des entsprechenden Spannungsabfalles über dem Meßwiderstand R_{M} festgestellt wird. Dies läßt sich mit bekannten Schaltungen nach dem peak-hold-Prinzip besonders leicht realisieren.

## Patentansprüche

1. Schaltungsanordnung zum Überwachen einer Steuerschaltung, die einen Treibertransistor aufweist, mit dem in einer induktiven Last ein vorgegebener Strommittelwert durch getaktete, puls-weiten-modulierte Ansteuerung (PWM) des Treibertransistors eingestellt wird, und bei der in den Sperrintervallen des Treibertransistors durch die induktive Last ein Stromfluß über einen zu der induktiven Last parallelen, mit einem Schalter ausgerüsteten Schaltungszweig hervorgerufen wird, dadurch **gekennzeichnet,** daß parallel zu dem Treibertransistor (T1) über ein Schaltelement (T3) eine Strommeßeinrichtung (R_{M},3) angeschlossen ist und daß während einer Testphase (tₜₑₛₜ - t₆) der während der Sperrintervalle durch die induktive Last (L) hervorgerufene Strom (i_{L}) zu dieser Strommeßeinrichtung (R_{M},3) geleitet wird.

2. Schaltungsanordnung nach Anspruch 1, dadurch **gekennzeichnet,** daß sowohl der Schalter (T2) in dem zu der induktiven Last (L) parallelen Schaltungszweig als auch das Schaltelement (T3) zur Anschaltung der Strommeßeinrichtung (R_{M},3) in Form von Schalttransistoren ausgebildet sind.

3. Schaltungsanordnung nach Anspruch 2, dadurch **gekennzeichnet,** daß die Umleitung des in den Sperrintervallen durch die induktive Last (L) hervorgerufenen Stromes (i_{L}) durch Sperren des in dem Parallelzweig eingefügten Schalttransistors (T2) Und durch Ansteuern des zur Strommeßeinrichtung (R_{M},3) fahrenden Transistors (T3) erfolgt.

4. Schaltungsanordnung nach einem oder mehreren der vorhergehenden Ansprüche 1 - 3, dadurch **gekennzeichnet,** daß die Strommeßeinrichtung (R_{M},3) einen ohmschen Meßwiderstand (R_{M}) enthält, über dem in der Testphase (tₜₑₛₜ - t₆) bei ordnungsgemäßem Betrieb eine über die Versorgungsspannung +Uj_{B} der Steuerschaltung liegende Spannung (U_{M}) abfällt.

5. Schaltungsanordnung nach Anspruch 4, dadurch gekennzeichnet, daß der Spannungsabfall (K_{M}) über dem Meßwiderstand (R_{M}) auf Einhalten eines unteren und eines oberen Grenzwertes überwacht wird.

6. Schaltungsanordnung nach einem oder mehreren der vorher gehenden Ansprüche 1 - 5, dadurch **gekennzeichnet,** daß an eine gemeinsame Strommeßeinrichtung (R_{M},3) über Entkopplungsdioden (D1, D2, D3) mehrere Steuerschaltungen angeschlossen sind.

## Claims

1. Circuit arrangement for monitoring a control circuit including a driver transistor which is used to adjust in an inductive load a predetermined average current value by a clocked, pulse-width modulated actuation (PWM) of the driver transistor, and wherein current flow is induced by the inductive load in the blocking intervals of the driver transistor by way of a circuit branch which is in parallel to the inductive load and has a switch,
**characterized** in that a current measuring device (R_{M}, 3) is connected in parallel to the driver transistor (T1) by way of a switching element (T3), and in that in a test period (tₜₑₛₜ - t₆) the current (i_{L}), which is induced by the inductive load (L) during the blocking intervals, is conducted to the current measuring device (R_{M}, 3).

2. Circuit arrangement as claimed in claim 1,
**characterized** in that both the switch (T2) in the circuit branch in parallel to the inductive load (L) and the switching element (T3) for activating the current measuring device (R_{M}, 3) are configured as switching transistors.

3. Circuit arrangement as claimed in claim 2,
**characterized** in that the course of the current (i_{L}) which is induced by the inductive load (L) in the blocking intervals is diverted by closing the switching transistor (T2) that is inserted into the parallel circuit branch and by actuating the transistor (T3) that leads to the current measuring device (R_{M}, 3).

4. Circuit arrangement as claimed in any one or more of the preceding claims 1 to 3,
**characterized** in that the current measuring device (R_{M}, 3) includes an ohmic measuring resistor (R)_{M}, across which there is a drop of a voltage (U_{M}), exceeding the supply voltage +U_{B} of the control circuit, in the test period (tₜₑₛₜ - t₆) during fail-free operations.

5. Circuit arrangement as claimed in claim 4,
**characterized** in that the voltage drop (K_{M}) across the measuring resistor (R_{M}) is monitored with respect to maintaining a bottom and a top limit value.

6. Circuit arrangement as claimed in any one or more of the preceding claims 1 to 5,
**characterized** in that a number of control circuits are connected to a joint current measuring device (R_{M}, 3) by way of decoupling diodes (D1, D2, D3).

## Revendications

1. Agencement de circuit, servant à surveiller un circuit de commande comprenant un transistor d'attaque, au moyen duquel une valeur moyenne de courant préfixée est établie dans une charge inductive au moyen d'un actionnement commandé, cadencé et modulé en largeur d'impulsion du transistor d'attaque, et dans lequel, dans les intervalles de blocage du transistor d'attaque, un flux de courant est créé au moyen de la charge inductive dans une branche de circuit parallèle à la charge inductive et pourvue d'un interrupteur, caractérisé en ce qu'un dispositif de mesure de courant (R_{M}, 3) est raccordé parallèlement au transistor d'attaque (T1) et par l'intermédiaire d'un élément de commutation (T3) et én ce que, pendant une phase de test (tₜₑₛₜ - t₆) , le courant (i_{L}) créé par la charge inductive (L) pendant les intervalles de blocage est conduit à ce dispositif de mesure de courant (R_{M}, 3).

2. Agencement de circuit suivant la revendication 1, caractérisé en ce qu'aussi bien l'interrupteur (T2) situé dans la branche de circuit parallèle à la charge inductive (L) que l'élément de commutation (T3) servant à la mise en circuit du dispositif de mesure de courant (R_{M}, 3) sont réalisés sous forme de transistors de commutation.

3. Agencement de circuit suivant la revendication 2, caractérisé en ce que la déviation du courant (i_{L}) créé à travers la charge inductive (L) dans les intervalles de blocage s'effectue au moyen d'un blocage du transistor de commutation (T2) monté dans la branche parallèle et au moyen d'un actionnement commandé du transistor (T3) menant au dispositif de mesure de courant (R_{M}, 3).

4. Agencement de circuit suivant une ou plusieurs des revendications précédentes 1 - 3, caractérisé en ce que le dispositif de mesure de courant (R_{M}, 3) contient une résistance oblique de mesure (R_{M}) entre les bornes de laquelle, dans la phase de test (tₜₑₛₜ - t₆) et en fonctionnement normal, il se produit une chute d'une tension (U_{M}) supérieure à la tension d'alimentation (+U_{B}) du circuit de commande.

5. Agencement de circuit suivant la revendication 4, caractérisé en ce que la chute de tension (U_{M}) entre les bornes de la résistance de mesure (R_{M}) est surveillée en ce qui concerne le respect d'une valeur limite inférieure et d'une valeur limite supérieure.

6. Agencement de circuit suivant une ou plusieurs des revendications précédentes 1 - 5, caractérisé en ce que plusieurs circuits de commande sont raccordés à un dispositif de mesure de courant (R_{M}, 3) commun par l'intermédiaire de diodes de découplage (D1, D2, D3.
